# EUROPÄISCHE PATENTSCHRIFT

(11) **EP 3 472 009 B1**
(45) Veröffentlichungstag und Bekanntmachung des Hinweises auf die Patenterteilung: **03.11.2021**
(21) Anmeldenummer: 17718051.0
(22) Anmeldetag: 12.04.2017
(51) Int. Cl.: B60T 8/1755, B62D 15/02, B60W 30/02

(54) **VERFAHREN ZUR DURCHFÜHRUNG EINES FAHRERUNABHÄNGIGEN BREMSVORGANGS EINES KRAFTFAHRZEUGS**
METHOD FOR HAVING A MOTOR VEHICLE PERFORM A DRIVER-INDEPENDENT BRAKING MANEUVER
PROCÉDÉ PERMETTANT D'EXÉCUTER UN PROCESSUS DE FREINAGE INDÉPENDANT DU CONDUCTEUR SUR UN VÉHICULE À MOTEUR

(30) Priorität: 20.06.2016 DE 102016210921
(43) Veröffentlichungstag der Anmeldung: 24.04.2019
(73) Patentinhaber: Robert Bosch GmbH, 70442 Stuttgart (DE)
(72) Erfinder: SCHMIDT, Thomas, 74321 Bietigheim-Bissingen (DE); STREHLE, Alfred, 70736 Fellbach (DE); MENGELKAMP, Markus, 74321 Bietigheim-Bissingen (DE)
(86) Internationale Anmeldenummer: PCT/EP2017/058889
(87) Internationale Veröffentlichungsnummer: WO 2017/220230

(56) Entgegenhaltungen:
- WO-A1-03/006288
- DE-A1-102008 034 316
- DE-A1-102013 113 685
- DE-A1-102014 013 173

## Beschreibung

### Stand der Technik

Aus der nicht vorveröffentlichten DE 10 2015 224 601.9 ist ein Verfahren zur Steuerung eines hydraulischen Bremssystems eines Fahrzeugs bekannt. Das Bremssystem umfasst einen steuerbaren ersten Bremsdruckerzeuger sowie einen Geber für ein Verzögerungssignal des Fahrzeugs. Das Verfahren umfasst dabei die Schritte:
- Aufprägen einer Druckcharakteristik mittels des ersten Bremsdruckerzeugers auf einen ursprünglichen Sollbremsdruck,
- Überwachen des Verzögerungssignals auf das Vorhandensein einer der Druckcharakteristik entsprechenden Verzögerungscharakteristik.

Aus der DE 10 2013 113 685 A1 ist ein Verfahren zum selektiven Verwenden von Funktionen eines elektrischen Feststellbremssystems (EPB) und Hydraulikbremssystems eines Fahrzeugs zum Steuern einer Fahrzeugrichtung bekannt. Insbesondere offenbart dieses Dokument ein Verfahren zum selektiven Verwenden von Funktionen eines Hilfsbremssystems und Hydraulikbremssystems eines Fahrzeugs zum automatischen Steuern einer Fahrzeugrichtung im Fall eines Ausfalls der automatischen Servolenkung.

### Offenbarung der Erfindung

Die Erfindung betrifft ein Verfahren zur Durchführung eines fahrerunabhängigen Bremsvorgangs eines Kraftfahrzeugs, bei dem
- eine Solltrajektorie des Kraftfahrzeugs ermittelt wird,
- eine die die zur Führung des Kraftfahrzeugs auf der Solltrajektorie erforderliche Seitenführungskraft repräsentierende Seitenführungskraftgröße ermittelt wird
- abhängig von der Seitenführungskraftgröße eine die maximal in Fahrzeuglängsrichtung absetzbare Längskraft repräsentierende Längskraftgröße ermittelt wird und
- abhängig von der Längskraftgröße fahrerunabhängig eine die Bremskraft des Kraftfahrzeugs repräsentierende Bremskraftgröße eingestellt wird,
- wobei der fahrerunabhängige Bremsvorgang im Rahmen eines sekundären Bremssystems bei Ausfall des primären Betriebsbremssystems durchgeführt wird,
- wobei es sich bei dem sekundären Bremssystem um ein bezüglich der Fahrzeuglängsachse symmetrische Bremseingriffe durchführendes Bremssystem handelt,
- wobei mittels der Auswertung des Ausgangssignals eines Längsbeschleunigungssensors eine bei angenommener Geradeausfahrt maximal absetzbare Bremskraft ermittelt wird und abhängig von der ermittelten erforderlichen Seitenführungskraft und der ermittelten maximal absetzbaren Bremskraft die fahrerunabhängige Bremskraft eingestellt wird,
- wobei eine oszillierende Bremskraftgrößenschwankung der Bremskraftgröße überlagert wird anhand der Auswertung des Ausgangssignals eines Längsbeschleunigungssensors die maximal absetzbare Längskraft ermittelt wird.

Damit wird bei dem Bremsvorgang des Fahrzeugs gleichzeitig eine stabile Seitenführung gewährleistet, was insbesondere bei einer Kurvenbremsung erforderlich ist.

Die Erfindung ermöglichtht insbesondere einen sicheren Bremsvorgang bis zum Stillstand bei Ausfalls des primären Bremssystems während einer Kurvenfahrt oder eines Ausweichmanövers.

Eine vorteilhafte Ausgestaltung des erfindungsgemäßen Verfahrens ist dadurch gekennzeichnet, dass die Solltrajektorie mittels einer Umfeldsensorik ermittelt wird. Da die Umfeldsensorik eines Kraftfahrzeugs häufig vom primären Betriebsbremssystem entkoppelt ist, stehen auch bei Ausfall des Betriebsbremssystems häufig die auf der Umfeldsensorik ermittelten Daten wie z.B. geplante Trajektorien weiter zuverlässig zur Verfügung und können auch von einem sekundären Bremssystem bzw. Reservebremssystem genutzt werden.

Eine vorteilhafte Ausgestaltung des erfindungsgemäßen Verfahrens ist dadurch gekennzeichnet, dass die Solltrajektorie durch wenigstens einen Sollwert einer die Fahrzeugquerdynamik kennzeichnenden Querdynamikgröße gekennzeichnet ist.

Eine vorteilhafte Ausgestaltung des erfindungsgemäßen Verfahrens ist dadurch gekennzeichnet, dass mittels eines Sensorsystems der Istwert der Querdynamikgröße ermittelt wird und ein fahrerunabhängiger Lenkeingriff derart durchgeführt wird, dass der Istwert dem Sollwert angenähert wird. Dadurch wird das Fahrzeug soweit möglich auf der ermittelten Solltrajektorie geführt.

Eine vorteilhafte Ausgestaltung des erfindungsgemäßen Verfahrens ist dadurch gekennzeichnet, dass es sich bei der Querdynamikgröße um die Gierrate oder die Querbeschleunigung handelt.

Eine vorteilhafte Ausgestaltung der Erfindung ist dadurch gekennzeichnet, dass es sich bei der Bremskraftgröße um den Bremsdruck in einem Radbremszylinder handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

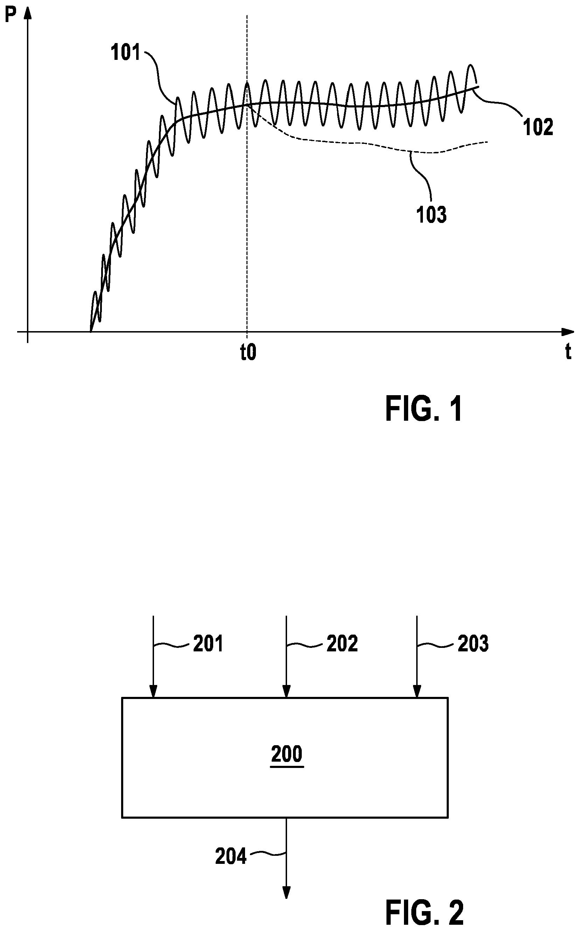

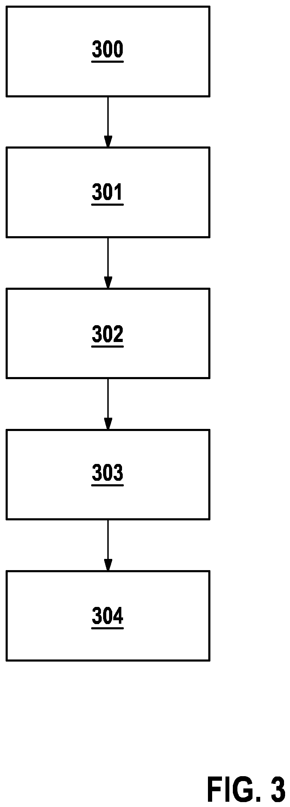

Die Zeichnung umfasst die Figuren 1 und 2.
Fig. 1 den zeitlichen Verlauf eines von einer Sekundäraktuatorik aufgebrachten Bremsdrucks P.
Fig. 2 zeigt eine Sekundäraktuatorik mit ihren Eingangs- und Ausgangsgrößen.

Im Bereich des automatisierten, hochautomatisierten und teilautomatisierten Fahrens eines Kraftfahrzeugs lässt sich im Normalbetrieb eine Fahrzeugstabilisierung über eine Einrichtung zur radindividuellen aktiven und passiven Bremsdruckmodulation wie beispielsweise einer Fahrdynamikregelung mitsamt zugehöriger Aktuatorik durchführen. Dieses für den Normalfall vorgesehene System wird als Primäraktuatorik bezeichnet.

Im Fall eines Ausfalls der Primäraktuatorik ist es erforderlich, dass eine sekundäre Stabilisierungsaktuatorik bzw. Sekundäraktuatorik zur Verfügung steht, welche zumindest eine Längsstabilisierung des Kraftfahrzeugs erlaubt. Dabei werden an die Sekundäraktuatorik folgende Erfordernisse gerichtet:
- die Einhaltung der Blockierreihenfolge muss gewährleistet sein, d.h. die Hinterachsräder dürfen erst blockieren, wenn die Räder der Vorderachse bereits blockieren,
- die Blockierdauer von Rädern darf eine vorgegebene zeitliche Dauer nicht überschreiten, um die Lenkbarkeit des Kraftfahrzeugs sicherzustellen und
- es muss die Möglichkeit eines aktiven bzw. fahrerunabhängigen Druckaufbaus zur Durchführung einer automatisierten Fahrzeugverzögerung gegeben sein.

Aus Sicherheitsgründen ist es empfehlenswert, die Sensordaten der Primäraktuatorik nicht für die Sekundäraktuatorik zu verwenden, denn bei einem Ausfall der Primäraktuatorik können deren Sensordaten entweder fehlen oder fehlerhaft sein.

Da die Sekundäraktuatorik zumindest eine Längsstabilisierung des Fahrzeugs sicherstellen muss, müssen auch für die Sekundäraktuatorik wenigstens die Längsdynamik des Fahrzeugs beschreibende Sensorsignale zur Verfügung stehen. Beispielsweise kann für die Sekundäraktuatorik das Ausgangssignal eines nicht in die Primäraktuatorik integrierten Längsbeschleunigungssensors zur Verfügung stehen. Dazu kann die Sekundäraktuatorik z.B. auf den im Rahmen einer Airbagsteuerung verwendeten Längsbeschleunigungssensor zurückgreifen oder auf einen mit der Primäraktuatorik gemeinsamen Längsbeschleunigungssensor, dessen Signalverarbeitung jedoch nicht in der Primäraktuatorik stattfindet, so dass dieser Sensor auch bei deren Ausfall zur Verfügung steht. Zur Abschätzung längsdynamikrelevanter Größen wie z.B. dem aktuellen Reibwert kann zum Beispiel dem im Rahmen der Sekundäraktuatorik an den Radbremszylindern eingesteuerten Bremsdruck eine sinusförmige Bremsdruckoszillation überlagert werden, wie dies in Fig. 1 dargestellt ist und später näher erläutert wird. Anhand des Ausgangssignals des Längsbeschleunigungssensors kann dann auf den Reibwert geschlossen werden.

Alternativ können bei der Übergabe auf die Sekundäraktuatorik auch die die Radzustände beschreibenden Größen wie z.B. die Raddrehzahlen verwendet werden, wenn deren Signalverarbeitung nicht im Steuergerät der Primäraktuatorik stattfindet, so dass die Raddrehzahlen auch bei deren Ausfall zuverlässig sind.

Insbesondere beim hochautomatisierten Fahren ist häufig eine z.B. mittels einer Videosensorik ermittelte Solltrajektorie für das Fahrzeug bekannt, welche für eine sichere Fahrzeugführung möglichst gut eingehalten werden sollte. Falls die Solltrajektorie eine räumliche Krümmung aufweist, wie es z.B. beim Durchfahren einer Kurve oder einem Ausweichmanöver der Fall ist, dann ist zudem die Verfügbarkeit einer ausreichend hohen Seitenführungskraft erforderlich. Das bedeutet, dass die absetzbare Fahrzeuglängskraft dann nicht bis zum physikalischen Maximum realisiert werden darf, da in diesem Fall gemäß dem Kamm'schen Kreis keine Seitenführungskraft mehr zur Verfügung stehen würde.

Die Solltrajektorie zeichnet sich durch Größen wie eine zum jeweiligen Ort gehörende Sollgierrate, einen Sollenkwinkel oder eine Sollquerbeschleunigung aus. Steht der Istwert wenigstens einer dieser Größen im Rahmen der Sekundäraktuatorik zur Verfügung, dann kann dieser Istwert durch Lenk- oder Bremseingriffe dem entsprechenden Sollwert angenähert werden. Die der Solltrajektorie am jeweiligen Ort zugehörige Seitenführungskraft kann abgeschätzt werden und daraus anhand des Kammschen Kreises die maximal in Reifenlängsrichtung absetzbare Längskraft ermittelt werden.

In Fig. 1 ist in Abszissenrichtung die Zeit t und in Ordinatenrichtung ein von einer Sekundäraktuatorik erzeugter Bremsdruck P aufgetragen. 101 kennzeichnet dabei den oszillierenden Bremsdruckverlauf, welcher nach Ausfall der Primäraktuatorik aufgebracht wird, mit den deutlich erkennbaren, bewusst aufgebrachten oszillierenden Bremsdruckschwankungen. Der Verlauf 102 kennzeichnet den effektiv wirkenden Bremsdruck. Ab dem mittels einer strichlierten Vertikallinie eingezeichneten Zeitpunkt t0 liegen dem Fahrzeug Informationen über eine zu fahrende Solltrajektorie vor, welche beispielsweise mittels einer Video- und/oder Radarsensorik ermittelt wurde. Diese Solltrajektorie wird autonom z.B. mittels fahrerunabhängiger Lenkeingriffe gefahren. Gleichzeitig soll das Fahrzeug jedoch wegen des Ausfalls der Primäraktuatorik sicher in den Stillstand gebremst werden. Ab Kenntnis der Solltrajektorie, d.h. für t > t0, wird deshalb der Bremsdruck auf den Verlauf 103 abgesenkt, um die infolge der bekannten Solltrajektorie bekannten Querkräfte bzw. Seitenführungskräfte aufbringen zu können.

In Fig. 2 kennzeichnet Block 200 die für eine einkanalige Längsstabilisierung ausgelegte Sekundäraktuatorik, welche bei einem Ausfall der Primäraktuatorik zum Einsatz kommt. Weiter zeigt Fig. 2 die folgenden Eingangsgrößen in die Sekundäraktuatorik:
201: zur Verfügung stehende Fahrzeuglängsinformationen, insbesondere die Fahrzeuglängsbeschleunigung bzw. -verzögerung.
202: die mittels einer von der ausgefallenen Primäraktuatorik unabhängigen Sensorik ermittelte Solltrajektorie für das Fahrzeug.
203: von der ausgefallenen Primäraktuatorik unabhängige Sensorgrößen, welche den querdynamischen Istzustand anzeigen, wie z.B. die Gierrate oder die Querbeschleunigung.

Als Ausgangsgröße 204 wird in Fig. 2 der Zielbremsdruck bzw. die Zielbremskraft bzw. das Zielbremsmoment ermittelt, welcher von der Sekundäraktuatorik eingestellt werden soll, um das Fahrzeug sicher zum Stillstand zu bringen.

## Patentansprüche

1. Verfahren zur Durchführung eines fahrerunabhängigen Bremsvorgangs eines Kraftfahrzeugs, bei dem
- eine Solltrajektorie (202) des Kraftfahrzeugs ermittelt wird (301),
- eine die die zur Führung des Kraftfahrzeugs auf der Solltrajektorie (202) erforderliche Seitenführungskraft repräsentierende Seitenführungskraftgröße ermittelt wird (302)
- abhängig von der Seitenführungskraftgröße eine die maximal in Fahrzeuglängsrichtung absetzbare Längskraft repräsentierende Längskraftgröße ermittelt wird (303) und
- abhängig von der Längskraftgröße fahrerunabhängig eine die Bremskraft des Kraftfahrzeugs repräsentierende Bremskraftgröße (204) eingestellt wird (304),
- wobei der fahrerunabhängige Bremsvorgang im Rahmen eines sekundären Bremssystems bei Ausfall des primären Betriebsbremssystems durchgeführt wird,
- wobei es sich bei dem sekundären Bremssystem um ein bezüglich der Fahrzeuglängsachse symmetrische Bremseingriffe durchführendes Bremssystem handelt,
- wobei mittels der Auswertung des Ausgangssignals eines Längsbeschleunigungssensors (201) eine bei angenommener Geradeausfahrt maximal absetzbare Bremskraft ermittelt wird und abhängig von der ermittelten erforderlichen Seitenführungskraft und der ermittelten maximal absetzbaren Bremskraft die fahrerunabhängige Bremskraft (204) eingestellt wird,
**dadurch gekennzeichnet, dass** eine oszillierende Bremskraftgrößenschwankung der Bremskraftgröße überlagert wird anhand der Auswertung des Ausgangssignals eines Längsbeschleunigungssensors die maximal absetzbare Längskraft ermittelt wird.

2. Verfahren nach Anspruch 1, **dadurch gekennzeichnet, dass** die Solltrajektorie (202) mittels einer Umfeldsensorik ermittelt wird.

3. Verfahren nach Anspruch 1, **dadurch gekennzeichnet, dass** die Solltrajektorie (202) durch wenigstens einen Sollwert einer die Fahrzeugquerdynamik kennzeichnenden Querdynamikgröße gekennzeichnet ist.

4. Verfahren nach Anspruch 3, **dadurch gekennzeichnet, dass** mittels eines Sensorsystems der Istwert der Querdynamikgröße (203) ermittelt wird und ein fahrerunabhängiger Lenkeingriff derart durchgeführt wird, dass der Istwert (203) dem Sollwert angenähert wird.

5. Verfahren nach Anspruch 4, **dadurch gekennzeichnet, dass** es sich bei der Querdynamikgröße um die Gierrate oder die Querbeschleunigung handelt.

6. Verfahren nach Anspruch 1, **dadurch gekennzeichnet, dass** es sich bei der Bremskraftgröße um den Bremsdruck in einem Radbremszylinder handelt.

7. Vorrichtung, enthaltend Mittel, die zur Durchführung der erfindungsgemäßen Verfahren ausgestaltet sind.

## Claims

1. Method for carrying out a driver-independent braking operation of a motor vehicle, in which
- a desired trajectory (202) of the motor vehicle is ascertained (301),
- a lateral-guiding-force variable representing the lateral guiding force required for guiding the motor vehicle on the desired trajectory (202) is ascertained (302),
- dependent on the lateral-guiding-force variable, a longitudinal-force variable representing the longitudinal force that can be applied as a maximum in the longitudinal direction of the vehicle is ascertained (303) and
- dependent on the longitudinal-force variable, a braking-force variable (204) representing the braking force of the motor vehicle is set independently of the driver (304),
- wherein the driver-independent braking operation is carried out within a secondary braking system in the event of failure of the primary service braking system,
- wherein the secondary braking system is a braking system carrying out braking interventions that are symmetrical with respect to the longitudinal axis of the vehicle,
- wherein a braking force that can be applied as a maximum when assuming straight-ahead travel is ascertained by means of the evaluation of the output signal of a longitudinal acceleration sensor (201) and, dependent on the ascertained lateral guiding force that is required and the ascertained braking force that can be applied as a maximum, the driver-independent braking force (204) is set, **characterized in that** an oscillating braking-force variable fluctuation is overlaid on the braking force variable the longitudinal force that can be applied as a maximum is ascertained on the basis of the evaluation of the output signal of a longitudinal acceleration sensor.

2. Method according to Claim 1, **characterized in that** the desired trajectory (202) is ascertained by means of a driving environment sensor system.

3. Method according to Claim 1, **characterized in that** the desired trajectory (202) is **characterized by** at least one desired value of a transverse dynamics variable characterizing transverse vehicle dynamics.

4. Method according to Claim 3, **characterized in that** the actual value of the transverse dynamics variable (203) is ascertained by means of a sensor system and a driver-independent steering intervention is carried out in such a way that the actual value (203) is brought closer to the desired value.

5. Method according to Claim 4, **characterized in that** the transverse dynamics variable is the yaw rate or the transverse acceleration.

6. Method according to Claim 1, **characterized in that** the braking force variable is the braking pressure in a wheel brake cylinder.

7. Device, containing means which are designed for carrying out the methods according to the invention.

## Revendications

1. Procédé permettant d'exécuter un processus de freinage, indépendant du conducteur, d'un véhicule automobile, dans lequel
- une trajectoire théorique (202) du véhicule automobile est déterminée (301),
- une grandeur de force de guidage latéral représentant la force de guidage latéral nécessaire au guidage du véhicule automobile sur la trajectoire théorique (202) est déterminée (302),
- en fonction de la grandeur de force de guidage latéral, une grandeur de force longitudinale représentant la force longitudinale pouvant être déduite au maximum dans la direction longitudinale du véhicule est déterminée (303), et
- en fonction de la grandeur de force. longitudinale, indépendamment du conducteur, une grandeur de force de freinage (204) représentant la force de freinage du véhicule automobile est réglée (304),
- le processus de freinage indépendant du conducteur étant exécuté dans le cadre d'un système de freinage secondaire en cas de défaillance du système de freinage de service primaire,
- le système de freinage secondaire étant un système de freinage exécutant des interventions de freinage symétrique par rapport à un axe longitudinal du véhicule,
- une force de freinage pouvant être déduite au maximum étant déterminée au moyen de l'évaluation du signal de sortie d'un capteur d'accélération longitudinal (201) en supposant une marche avant, et la force de freinage (204) indépendante du conducteur étant réglée en fonction de la force de guidage latéral nécessaire déterminée et de la force de freinage pouvant être déduite au maximum déterminée,
**caractérisé en ce qu'**une variation de grandeur de force de freinage oscillante est superposée à la grandeur de force de freinage la force longitudinale pouvant être déduite au maximum est déterminée à l'aide de l'évaluation du signal de sortie d'un capteur d'accélération longitudinale.

2. Procédé selon la revendication 1, **caractérisé en ce que** la trajectoire théorique (202) est déterminée au moyen d'un système de capteurs d'environnement.

3. Procédé selon la revendication 1, **caractérisé en ce que** la trajectoire théorique (202) est **caractérisée par** au moins une valeur théorique d'une grandeur de dynamique transversale caractérisant la dynamique transversale du véhicule.

4. Procédé selon la revendication 3, **caractérisé en ce qu'**au moyen d'un système de capteurs, la valeur réelle de la grandeur de dynamique transversale (203) est déterminée, et une intervention de direction indépendante du conducteur est exécutée de telle sorte que la valeur réelle (203) s'approche de la valeur théorique.

5. Procédé selon la revendication 4, **caractérisé en ce que** la grandeur de dynamique transversale est le taux de lacet ou l'accélération transversale.

6. Procédé selon la revendication 1, **caractérisé en ce que** la grandeur de force de freinage est la pression de freinage dans un cylindre de frein de roue.

7. Dispositif comportant des moyens qui sont conçus pour exécuter le procédé selon l'invention.
